# EUROPEAN PATENT APPLICATION

(11) **EP 2 484 849 A2**
(43) Date of publication of application: **08.08.2012**
(21) Application number: 12153942.3
(22) Date of filing: 03.02.2012
(51) Int. Cl.: E04H 15/08

(54) **Land vehicle awning**

(30) Priority: 04.02.2011 GB 201101919
(71) Applicant: Brodie, Leslie, Strathaven South Lanarkshire ML10 6PA (GB)
(72) Inventor: Brodie, Leslie, Strathaven South Lanarkshire ML10 6PA (GB)
(74) Representative: Edwards, David Harvey Lloyd

(57) **Abstract**

Land vehicle awning (1) for forming a protected space external to the land vehicle (2), comprising an elongate connection portion (22) for connecting the awning to the land vehicle, an inflatable tubular frame (11) inflatable by pressurised gas to provide rigidity, and a protective skin (100) extending between the elongate connecting portion and the tubular frame. The tubular frame comprises a supporting portion (110) which when inflated is arranged to be spaced away from the land vehicle and to extend generally upwardly from a ground surface for supporting the protective skin and at least partially enclosing the protected space.

## Description

### Field of the Invention

The present invention relates to an inflatable land vehicle awning.

### Background

For environmental reasons increasing numbers of people are taking local holidays taking advantage of the own area, region or country, colloquially known as staycations. For cost reasons increasing numbers of these staycationers or users are choosing to travel in caravans, camper vans, caravanettes or mobile homes, which are hereafter used interchangeably. Given that the majority of these holidays are in reasonably clement but not necessarily permanently dry weather, stealing is known on caravan sites, and available space within a typical mobile home is minimal, often many users will keep possessions and spend time outdoors. In addition it is preferable to have this outdoor space definable and closed to third parties.

### Prior Art

For this reason many mobile homes have attachments and provision for awnings. However the time to erect such awnings may be less conducive to use for a shorter stay, such as overnight. In addition typically awnings are overhead canopies extending out from the mobile home, and although provide shelter from vertical rain, do not provide shelter from lateral wind, slanted rain or thieves and vandals.

The common method of erecting an awning for a caravan is to attach the awning to the caravan by means of a rope beading which slides through an aluminium channel secured to the caravan, or caravan awning rail. The awning is then framed and tightened using adjustable poles made of aluminium or composite materials. Ideally this is a two man operation, at least depending on the size of the awning, and is a struggle for elderly or infirm people.

Inflatable caravan awnings are also known which are quicker to erect, utilising a combination of rigid struts and inflatable portions. The awnings typically stand away from the caravan as the inflatable portion(s) are simple replacements or additions to rigid vertical and generally horizontal top struts and accordingly unless attached to the mobile home at lower points simply consist of a standalone lean-to structure. This leads to the likelihood of wind, rain or intruder entrance.

Other related forms of inflatable mobile awning include the following:
United States patent application US 2009 025 302 (WANG) discloses an inflatable tent, comprising: an inflatable main body including a tent floor, an inner tent wall, an outer tent wall, and a tent roof; the inner and the outer tent wall together defining an inflatable space therebetween and constituting a tent wall; whereby when the inflatable main body is fully inflated, the tent floor, the inner tent wall, and the tent roof together enclose an interior space; an inflation valve mounted on the outer tent wall, so that air is supplied into the inflatable space between the inner and the outer tent wall via the inflation valve; at least one entrance formed on the tent wall of the inflatable main body, so that the interior space is accessible via the entrance; a bathroom arranged in the interior space at a selected position, and communicable with the inflatable space between the inner and the outer tent wall; and a utility cabinet located outside the inflatable main body, and including at least one water tank, which is communicable with the bathroom via an inlet pipeline and a drain pipeline.

International patent application WO 2008 068 493 (CUNNINGHAM et al) discloses an inflatable canopy structure comprising first and second inflatable beams, and an inflatable panel secured between, and supported by, said beams.

United Kingdom patent application GB 2 424 425 (WOODCOCK) discloses a lightweight portable sun awning that is opened and supported by an inflated tube which houses an integral inflatable water ballasted tube (depending on size and model) from which curtain panels are hung and connected by a means to an inflatable water ballasted foundation tube, which incorporates an optional built in ground sheet to form a portable waterproof conservatory type enclosure.

Granted United Kingdom patent GB2378925 (BANNER) discloses an inflatable caravan awning support system including a plurality of inflatable reinforced PVC tubes intended in use to be attached to a caravan and support an awning thereon, whereby the system comprises: two planar side walls each comprising two spaced apart substantially vertical inflatable tubes, one of which is adjacent to the caravan in use and two spaced apart transverse inflatable tubes joining the upper and lower ends of the vertical inflatable tubes respectively, whereby the transverse inflatable tubes extend away from the caravan in use and the lower one of the two tubes lies adjacent to the ground; a roof module comprising a substantially elongate inflatable tube connecting the upper ends of the vertical inflatable tubes which in use lie adjacent the caravan, and a plurality of spaced apart transverse inflatable tubes interconnecting said first and second elongate inflatable tubes; and a further wall spaced apart in use from the caravan and comprising a plurality of substantially vertical inflatable tubes connecting the second elongate inflatable tube and a third substantially elongate inflatable tube which in use lies adjacent the ground.

United Kingdom patent application US 2002 163 221 (SMITH) discloses a shelter attachment removably mounted to a bed of a pickup truck, said bed having a generally rectangular floor, first and second generally parallel sidewalls, a front wall and a rear tailgate capable of being raised and lowered, said shelter comprising: two or more lid braces; first and second removable bed lids, each having a substantially rectangular shape, a longitudinal edge of said first lid having a first hinge connection to the top of said first sidewall and a longitudinal edge of said second lid having a second hinge connection to the top of said second sidewall, said first and second lids covering said truck bed when closed, and each of said first and second lids supported in the open horizontal position by at least a respective one of said two or more braces; and a tent disposed over said open first and second lids and said truck bed, said tent erected to form a shelter.

However in contrast, the present invention provides an easy to erect single piece tenting screen or pod that provides an awning and supporting sides to define a self-contained exterior space for a mobile home.

### Summary of the Invention

According to the present invention there is provided a land vehicle awning for forming a protected space external to the land vehicle, comprising an elongate connection portion for connecting the awning to the land vehicle, an inflatable tubular frame inflatable by pressurised gas to provide rigidity, and a protective skin extending between the elongate connecting portion and the tubular frame, wherein the tubular frame comprises a supporting portion which when inflated is arranged to be spaced away from the land vehicle and to extend generally upwardly from a ground surface for supporting the protective skin and at least partially enclosing the protected space.

Other preferred and/or optional aspects are defined in the accompanying claims.

Preferably the frame will communicate with the mobile home and additionally or alternatively forms a skeleton to maintain a cover over a space in front of the mobile home.

The skin or canopy is ideally attached to the frame in such a way that inflation of the frame will tauten the skin such that the frame and skin interrelate in an opposing fashion.

In preferred embodiments a portion of the frame is locatable in a C shaped awning rail, such as is typically found on a caravan or caravanette.

In these embodiments the portion will take the form of a T shape which is slid along the rail in use in order to attach the screen to the caravan. In such embodiments the inflation of the screen will pull against this attachment, bracing the screen and tensioning the screen's inflated frame in a way that encourages close fitting to the mobile home.

In some embodiments the portion is partly locatable in use in a runner or rail on the mobile home, said rail being typically located about the mobile home or caravan roof in order to provide a run-off of any rain water that hits the roof, or alternatively or in addition being simply the seam where a side panel meets the roof.

Preferably the cover by contrast is not inflatable and is composed largely or entirely of an impermeable fabric or material such as a plastic, manmade or plasticised fabric. Sections of the cover may be formed from clear material such as plastic.

Lanyard attachment points may be provided along the frame, in particular along the frame that is lowermost in use and preferably contacts the ground. In this way the frame may be attached by pegs to the ground so as to prevent ingress of wind, animals or water.

In the alternative or in addition the frame and/or cover may provide attachment points or moulded or welded tethers for ropes, wires or strings such that said ropes may be used to tether the screen to the ground. In addition such ropes are used to stretch the cover out from the frame and further inform and rigidify interior space.

Some embodiments may provide frame portions that run perpendicularly to the mobile home so as to ensure that the frame defines an interior space for the screen that is of an appropriate area without the need for guy ropes or other strengthening mechanism. In preferred embodiments these perpendicular portions additionally act to extend the screen out from the mobile home when inflated in use.

### Brief Description of Figures

Figures 1 shows an isometric view of a land vehicle awning;

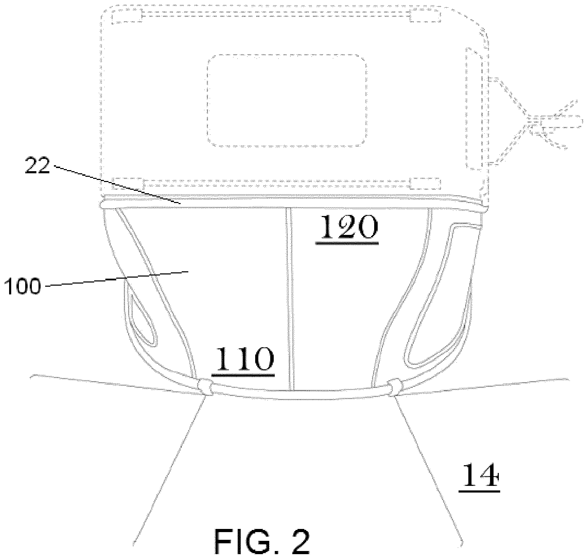

Figure 2 shows an overhead view of the land vehicle awning; and
Figure 3 shows a side view of the land vehicle awning;

### Detailed Description of Preferred Embodiment of the Invention

Referring to the drawings, a land vehicle awning 1 is shown for forming a protected space external to a land vehicle 2. The land vehicle may be a caravan as shown arranged to be pulled by a motorised land vehicle, a motorised mobile home or a trailer which is typically static. A caravan will be referred to in the description but should not be considered limiting. The awning allows human activity external to the caravan in a protected space, and provides a roof for protection from rain or sun and sides for protection from wind or driving rain. The sides may comprise windows or doors which can be opened.

Inflatable awnings are known and discussed above in relation to the prior art. However, these known awnings require the use of additional rigid, or tent, poles to support the awning and guy-ropes to tension the material of the awning after inflation. The present embodiment is self supporting and does not require rigid poles for support. Further, the act of inflation tensions the material of the awning between the caravan and the inflatable frame allowing the awning to be erected with minimal effort. Reduced effort is advantageous particularly when a user may stay at one caravan site for as little as one night. Additionally, the inflatable frame of the awning may have a single inflatable chamber which extends and communicates throughout the frame structure allowing inflation of the entire frame in a single operation, rather than inflating each member of a frame individually one after another.

The awning comprises an elongate connection portion 22 for connecting the awning to the land vehicle. The elongate connecting portion 22 may comprise a fixing arrangement for fixing the awning in a rail 12 extending along a roof line of the land vehicle. In use the awning, or screen, 1 is initially secured to the caravan 2 by utilising the rail or runner 12 of the caravan. This ensures secure anchoring and helps prevent the screen 1 from moving during inflation. In addition, given that in the pictured embodiment, and as is typical, the runner 12 also extends down the sides 20 of the caravan 2 and anchoring the connecting portion 22 to the sides helps to provide rigidity to the frame 11. In some embodiments the portion that secures to the connecting portion 22 may be inflatable in part or whole as being part of the frame 11 I and/or may be in part or whole semi-rigid being formed in plastic, rubber or elastomer.

An inflatable tubular frame 11 is inflatable by pressurised gas to provide rigidity to the awning. As described in more detail below the frame 11 comprises supporting portion 110, joining portions 120 and strengthening portions 130. In the preferred arrangement as shown, the supporting portion forms an arch which is structurally efficient since loading is absorbed in compression along its length and the compressed air in the arch is able to withstand high compression loading.

A protective skin 100 extends between the elongate connecting portion and the tubular frame 11 and between the different parts of the frame. The supporting portion 110 of the tubular frame when inflated is arranged to be spaced away from the caravan and to extend generally upwardly from a ground surface for supporting the protective skin and at least partially enclosing the protected space. As shown, the inflated frame supports the protective skin 100 forms a roof, and sides comprising windows 15 and doors 16.

The tubular frame 11 is arranged so that the supporting portion 110 extends generally upwardly and in a direction angled away from the caravan for tensioning the protective skin between the elongate connecting portion and the frame. The frame portion 110 extends in a curve or arch over the door 16 so that inflation causes the supporting portion 110 to push away from the connecting portion 120, providing tension in the frame 11 and pulling the roof taut. As shown, the supporting portion extends at an angle of about 60 degrees to the ground surface, although other angles can be adopted as required and within practical restraints.

The supporting portion 110 of the tubular frame 11 extends upwardly generally from a ground surface to a sufficient height to form with the protective skin the awning roof which is generally equal to the height of the land vehicle (i.e. about 2 metres high and suitable for a typical person to stand upright).

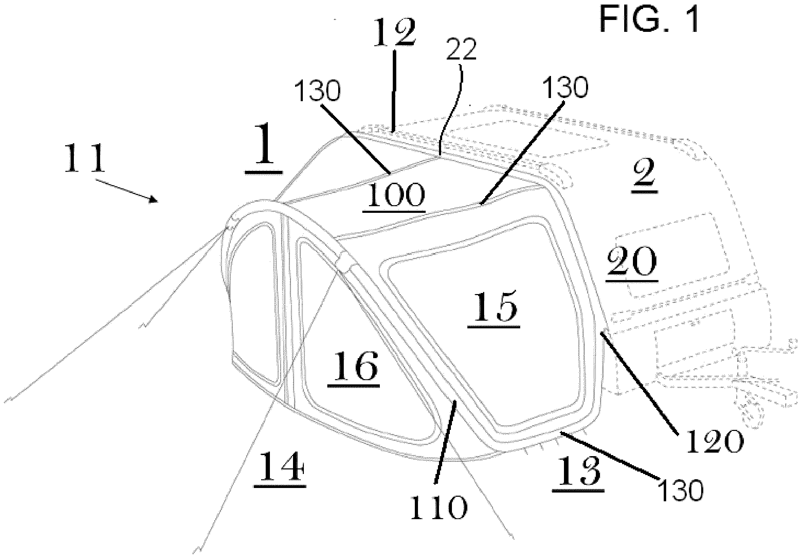

The tubular frame 11 comprises at least one strengthening portion 130 and when the frame is inflated the or each strengthening portion extends away from the land vehicle to the supporting portion 110 for spacing the supporting portion from the land vehicle and tensioning the protective skin. Three such strengthening portions are shown in Figure 1. Two strengthening portions are arranged to extend along a ground surface between the land vehicle and the supporting portion of the frame. Two further strengthening portions are arranged in the awning roof for tensioning the protective skin of the roof.

In preferred embodiments windows 15 may be provided as well as at least one door. The pictured embodiment has two doors 16 which are provided with zipper fastening. Further embodiments may include other means of fastening and other door configurations. In the preferred embodiment there are provided privacy curtains which cover screen's windows; alternatively, the entire front section of the screen can be unzipped and removed during hot weather. In preferred embodiments the screen additionally has a door at the face in contact with the caravan, in order that the screen is a self-contained unit and less liable to wind or rain ingress. In these embodiments the door may include a means of communicating with the caravan door or caravan body, for example inclusion of sucker pads or clips or other fastening, clip or location means.

The tubular frame 11 comprises two attaching portions 120 (only one can be seen in Figure 1) and when the frame is inflated the attaching portions are arranged to sit generally flush against the land vehicle and extend from a ground surface to respective ends of the elongate connecting portion for resisting the passage of wind or rain between the land vehicle and the awning. Part of the attaching portions may be received in the rail 12 if the rail 12 extends along the sides of the caravan.

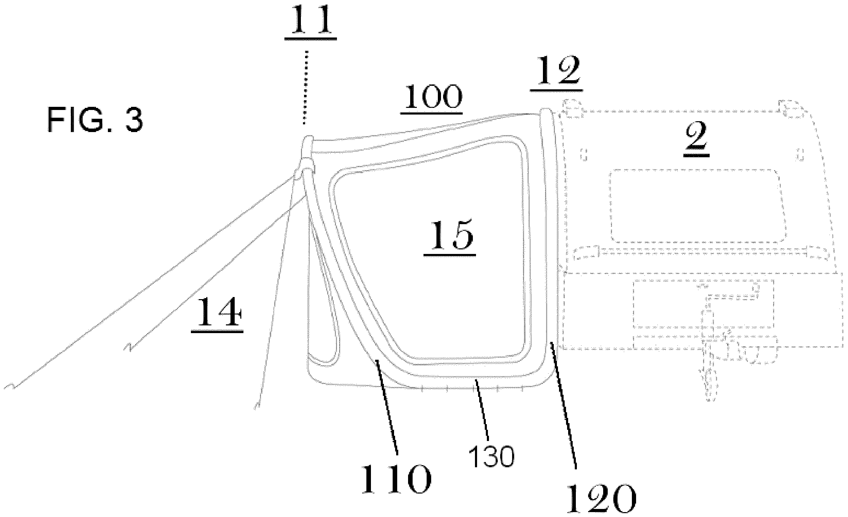

The attaching portions 120, the strengthening portions 130 and the supporting portion 110 (at least the ground strengthening portions) are arranged in a U-shaped configuration when viewed from the side as shown in Figure 3.

The tubular frame 11 comprises a sleeve formed from the protective skin 100 and an inflatable bladder (not shown) disposed along an inside of the sleeve, the bladder having at least one opening for receiving pressurised gas for inflating the bladder within the sleeve. When inflated the bladder expands to fill the inside of the sleeve, pressing against the sleeve and providing a rigid structure.

Assembly of the awning will now be described in more detail.

Prior to inflation, the user attaches the elongate connecting portion to the caravan which may with use of the rail 12 or with other fastening arrangements. Once the connection portion is attached, the user inflates the tubular frame. The supporting portion 110 expands upwardly and away from the caravan thereby raising the roof and tensioning the protective skin. That is, the supporting portion provides a force in an upwards direction and away from the caravan. The ground strengthening portions 130 expand generally perpendicularly away from the caravan along a ground surface. The distal ends of these strengthening portions furthest from the caravan provide a firm base for each end of the arched supporting portion 110 allowing the supporting portion to push away from the caravan without potentially slipping back towards the caravan. The further strengthening portions 130 in the roof also provide a force away from the caravan when inflated and additionally provide greater rigidity to the awning roof. The joining portions of the frame inflate and press against the side of the caravan to provide minimal spacing between the awning and the caravan to reduce the passage of wind or rain into the enclosed space.

Whilst the inflated frame provides a useable awning particularly in clement weather without the need for further fixings, pegs and guy-ropes may be used to provide additional stability in stronger wind or rain. It may be preferred when erecting the awning in such inclement conditions, to peg down the base of the awning prior to inflation. In this regard, the user may peg out the bottom shape of the awning using typical camping pegs 13. There are a plurality of pegging points at which the awning can be pegged to a ground surface. The awning comprises a plurality of lanyards for connection to a ground surface away from the awning. As required the user pegs out the guy or guide lines 14 (which may be tightened at any time), with the additional guy ropes 14 in some embodiments serving to further ensure stability in lateral wind conditions or similar. In use the screen 1 is preferably secured to the ground using an array of pegs 13 and four guy lines 14 which prevent movement during windy or turbulent weather.

In addition these guy ropes 14 help provide a base template for the inflated screen and when the screen is inflated help horizontal stability or rigidity in the event of wind or inclement conditions. Further guy lines may be provided for increased security in anchoring and are easily and quickly pulled out from the screen to provide typically diagonal rigidity to the screen and thereby in combination with the fixed rail portion prevent significant movement of the inflated screen.

In the preferred arrangement, the awning comprises an integrated pump for pumping air into (and preferably also out of) the tubular frame for inflating (and preferably also deflating) the frame. Operating the pump causes the tubular frame 11 to be inflated and the awning to adopt the configuration shown in the drawings. The tubular frame is configured to be inflated to a predetermined pressure for providing the required rigidity, and the pump is preferably configured such that when the predetermined pressure is achieved during inflation the pump ceases inflation. In this regard, the pump may receive a pressure signal from a pressure sensor and cease pumping when the pressure inside the frame has reached the predetermined pressure. Alternatively, the pump may pump air into the frame for a selected duration after which correct inflation pressure will have been reached.

In a modification of the awning shown in the drawings, rigid or strengthening panels are provided at the distal end of the ground strengthening members which when inflated extend upwardly and away from the caravan. These rigid panels fit in the generally triangular shape between a ground surface and each end of the arched support portion 110. The purpose of these panels is to ensure that the doors 16 extend in an approximately vertical plane and are tensioned by the rigid panels on each side thereof. Without the rigid panels it has been found that the doors would otherwise tend to loose and prone to flapping, or alternatively would be disposed at an angle to the ground surface.

The invention has been described by way of examples only and it will be appreciated that variation may be made to the above-mentioned embodiments without departing from the scope of invention.

With respect to the above description then, it is to be realised that the optimum dimensional relationships for the parts of the invention, to include variations in size, materials, shape, form, function and manner of operation, assembly and use, are deemed readily apparent and obvious to one skilled in the art, and all equivalent relationships to those illustrated in the drawings and described in the specification are intended to be encompassed by the present invention.

Therefore, the foregoing is considered as illustrative only of the principles of the invention. Further, since numerous modifications and changes will readily occur to those skilled in the art, it is not desired to limit the invention to the exact construction and operation shown and described, and accordingly, all suitable modifications and equivalents may be resorted to, falling within the scope of the invention.

## Claims

1. A land vehicle awning for forming a protected space external to the land vehicle, comprising an elongate connection portion for connecting the awning to the land vehicle, an inflatable tubular frame inflatable by pressurised gas to provide rigidity, and a protective skin extending between the elongate connecting portion and the tubular frame, wherein the tubular frame comprises a supporting portion which when inflated is arranged to be spaced away from the land vehicle and to extend generally upwardly from a ground surface for supporting the protective skin and at least partially enclosing the protected space.

2. An awning as claimed in claim 1, wherein the tubular frame is arranged so that the supporting portion is arched extending generally upwardly from a ground surface and at an angle in a direction away from the land vehicle for tensioning the protective skin between the elongate connecting portion and the frame.

3. An awning as claimed in 2, wherein the supporting portion of the tubular frame extends upwardly generally from a ground surface to a sufficient apex height to form with the protective skin an awning roof generally equal to the height of the land vehicle.

4. An awning as claimed in any one of the preceding claims, wherein the tubular frame comprises at least one strengthening portion and when the frame is inflated the or each strengthening portion extends away from the land vehicle to the supporting portion for spacing the supporting portion from the land vehicle and tensioning the protective skin.

5. An awning as claimed in claim 4, wherein at least one strengthening portion is arranged to extend along a ground surface between the land vehicle and the supporting portion of the frame.

6. An awning as claimed in any one of the preceding claims, wherein the tubular frame comprises two attaching portions and when the frame is inflated the attaching portions are arranged to sit generally flush against the land vehicle and extend from a ground surface to respective ends of the elongate connecting portion for resisting the passage of wind or rain between the land vehicle and the awning.

7. An awning as claimed in claim 6, wherein the attaching portions, the strengthening portions and the supporting portion are arranged in a U-shaped configuration.

8. An awning as claimed in any one of the preceding claims, wherein the tubular frame comprises a sleeve formed from the protective skin and an inflatable bladder disposed along an inside of the sleeve, the bladder having at least one opening for receiving pressurised gas for inflating the bladder within the sleeve.

9. An awning as claimed in any one of the preceding claims, wherein the elongate connecting portion comprises a fixing arrangement for fixing the awning in a rail extending along a roof line of the land vehicle.

10. An awning as claimed in any one of the preceding claims, comprising a plurality pegging points at which the awning can be pegged to a ground surface.

11. An awning as claimed in any one of the preceding claims, comprising a plurality of lanyards for connection to a ground surface away from the awning.

12. An awning as claimed in any one of the preceding claims, comprising a pump for pumping air into and/or out of the tubular frame for inflating and/or deflating the frame.

13. Awning as claimed in claim 12, wherein the tubular frame is configured to be inflated to a predetermined pressure for providing the required rigidity, and the pump is configured such that when the predetermined pressure is achieved during inflation the pump ceases inflation.
